# EUROPEAN PATENT APPLICATION

(11) **EP 1 705 768 A1**
(43) Date of publication of application: **27.09.2006**
(21) Application number: 06003698.5
(22) Date of filing: 23.02.2006
(51) Int. Cl.: H02G 3/04

(54) **Flexible sheath for protection of electrical cables**

(30) Priority: 02.03.2005 IT MI20050318
(71) Applicant: Noviteck SA, 6862 Rancate (CH)
(72) Inventor: Sanson, Danilo, 12059 Viggiu (Varese-Italia) (IT)
(74) Representative: Troesch Scheidegger Werner AG

(57) **Abstract**

A flexible sheath (1) for protection of electrical cables has a rigid spiral (10) having a plurality of turns (14) and a wall (12) associated with said rigid spiral (10). Each of said turns (14) has an elongate section having a length X and a width T that is less than or equal to length X and is disposed at a distance Y between two contiguous turns (14). Said wall (12) is associated with said rigid spiral (10) from the radial external part of said turns (14). Furthermore, a portion (24) of said wall (12) partially covers said turns (14) so that part of them, H, remains free and a portion (26) of said wall (12) extends between two contiguous turns (14). Thus, the flexible sheath (1) is particularly functional and versatile as well as easy to make.

## Description

The present invention relates to a flexible sheath for protection of electrical cables.

More specifically, the present invention relates to a flexible sheath for protection of electrical cables, particularly but not exclusively adapted for use whenever a conduit must be laid for an industrial or domestic system.

It is known that, in the creation of an electrical system, it is usual to lay the conduit first and run the electrical cables through it to the system. These conduits are made from channels of various types built in various materials.

Flexible sheaths are in widespread use for these channels because of their great adaptability, making them able to follow any route.

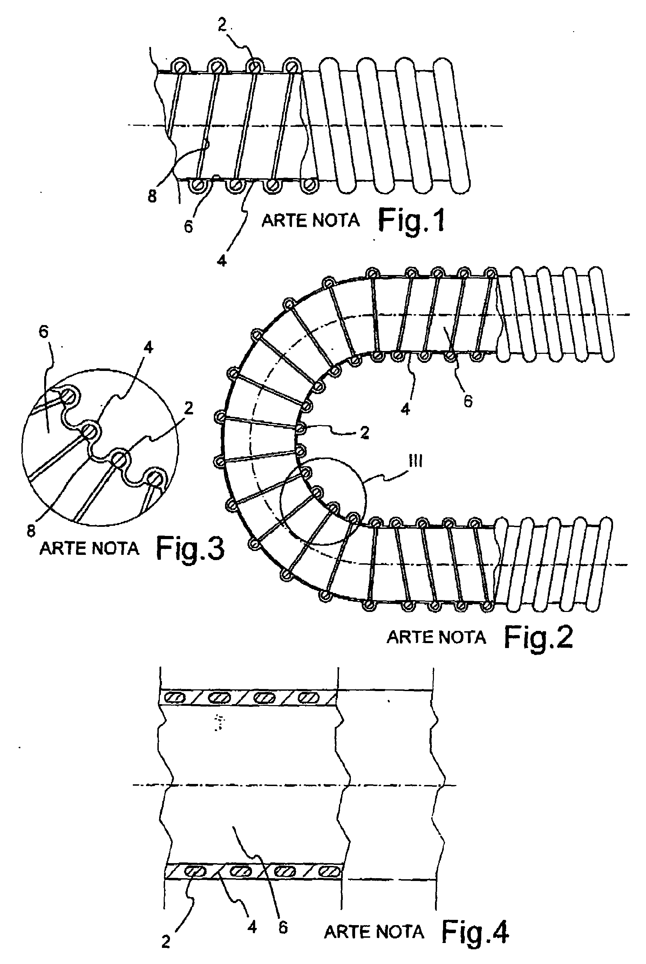

Typically, the prior art flexible sheaths, as shown in Figure 1, comprise a rigid spiral 2, preferably made of rigid PVC, mounted on a wall 4, preferably made of plasticized PVC, which defines a smooth internal surface 6 which in some cases has openings 8 exposing the rigid spiral 2. In the prior art, in addition to the just-described flexible sheath known as "light," there are flexible sheaths known as "heavy" of which Figure 4 illustrates one example.

These flexible sheaths, although they are in widespread use, have the serious drawback that the cables run with great difficulty because of the friction between the cable sleeving and the wall 4 made of plasticized material. Particularly in curved segments, as can be seen in Figures 2 and 4, the wall 4 bends toward the inside of the sheath creating bulges 8 that tend to restrict the cross section of the sheath. In these curved segments, the cables that are supposed to run inside encounter still further difficulties because of the narrowed cross section and because of the friction.

Hence, the goal of the present invention is to provide a flexible sheath for protection of electrical cables that would eliminate the drawbacks referred to in connection with the prior art.

According to the present invention, this and other goals that will emerge from the description below are achieved by a flexible sheath for protection of electrical cables defined in general in Claim 1.

The structural features and functions of the flexible sheath for protection of electrical cables of the present invention will be better understood from the description that follows, referring to the attached drawings that represent one embodiment provided for illustrative and exemplary but not limiting purposes, where:
- Figure 1 is a schematic view in partial section of the flexible sheath of prior art;
- Figure 2 is a schematic view in partial section of the flexible sheath of Figure 1 under conditions of use;
- Figure 3 is a schematic view on an enlarged scale of the detail marked III in Figure 2;
- Figure 4 is a schematic view in partial section of one structural variant of the prior art flexible sheath;
- Figure 5 is a schematic cross-sectional view of the flexible sheath of the present invention;
- Figure 6 is a schematic view in partial section of the flexible sheath of Figure 5 under conditions of use;
- Figure 7 is a schematic view on an enlarged scale of the detail marked VII in Figure 6;
- Figure 8 is a schematic view in partial section of the flexible sheath of Figure 5 as a variant under conditions of use;
- Figure 9 is a schematic view on an enlarged scale of the detail marked IX in Figure 8;
- Figure 10 is a schematic view of a structural variant in cross section of the flexible sheath of Figure 5;
- Figures 11a to 11e are schematic views in cross section of structural variants of the flexible sheath of Figure 5;
- Figure 12 is a schematic view in cross section of another structural variant of the flexible sheath of Figure 5;
- Figures 13a to 13e are schematic views in cross section of structural variants of the flexible sheath of Figure 10; and
- Figures 14a and 14b are schematic views in cross section of other structural variants of the flexible sheath of Figure 10.

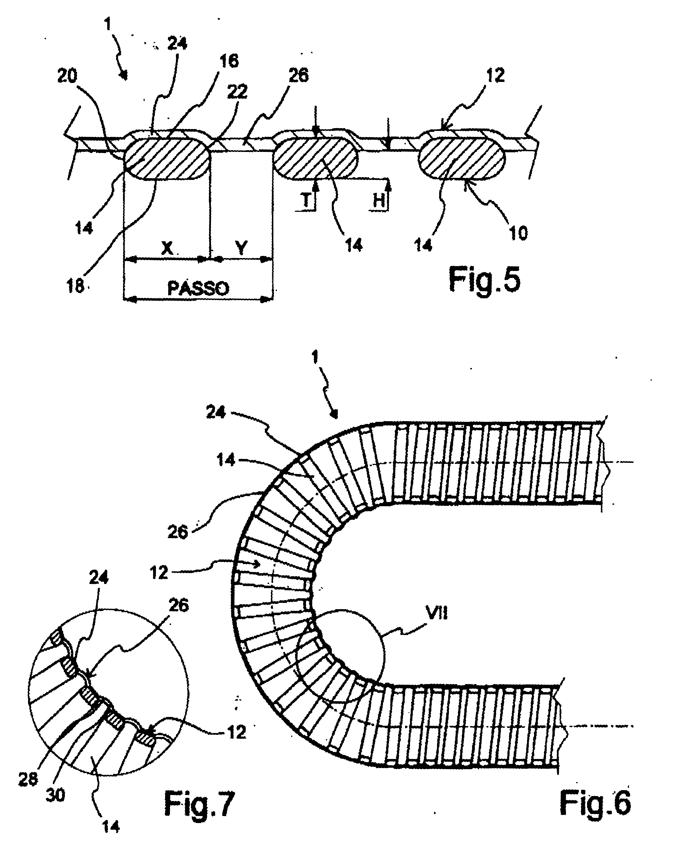

With reference to Figure 5, the flexible sheath of the present invention is indicated as a whole by 1.

In the present description, the term "lengthwise direction" means a direction coincident with or parallel to the axis of the flexible sheath, while the term "radial direction" or "radial" means a direction perpendicular to the lengthwise direction and passing through the axis of the flexible sheath.

The flexible sheath 1 has a rigid spiral 10 and a wall 12 associated with said rigid spiral 10.

The rigid spiral 10 has a plurality of turns 14 wound along the axis of flexible sheath 1. Each of turns 14 has an elongate section with a length X in the lengthwise direction and a width T in the transverse direction. Preferably, the cross section of each of turns 14 of the rigid spiral 10 has two parallel sides 16 and 18 connected by two arcs 20 and 22 so as to assume an ovoid shape. The rigid spiral 10 has a distance Y between two contiguous turns 14 that is less than or equal to the length X of the section. The sum of the length X of a turn 14 and the distance Y between two contiguous turns 14 is the winding PITCH of the rigid spiral 10.

The associated wall 12 is associated with and partially covers the part of the side 16 radially outside turns 14 of the rigid spiral 10. A portion 24 of wall 12 partially covers turns 14 so that part thereof, indicated by H, remains free. In other words, part of turns 14 is not covered by wall 12. A portion 26 of wall 12 extends between two contiguous turns 14 and is disposed radially toward the axis of flexible sheath 1 so that in relation to portion 26 the outer surface of the flexible sheath 1 has an indentation. The wall 12 has a thickness kept substantially constant for both the portions 24 and 26. The dimensions of part H, not covered by wall 12, is greater than or equal to half the distance Y between two contiguous turns 14. Obviously, the dimension of part H depends on the dimension - diameter - of flexible sheath 1. Indicatively, for smaller diameters of flexible sheath 1, the dimension of part H is greater than 0.2 mm.

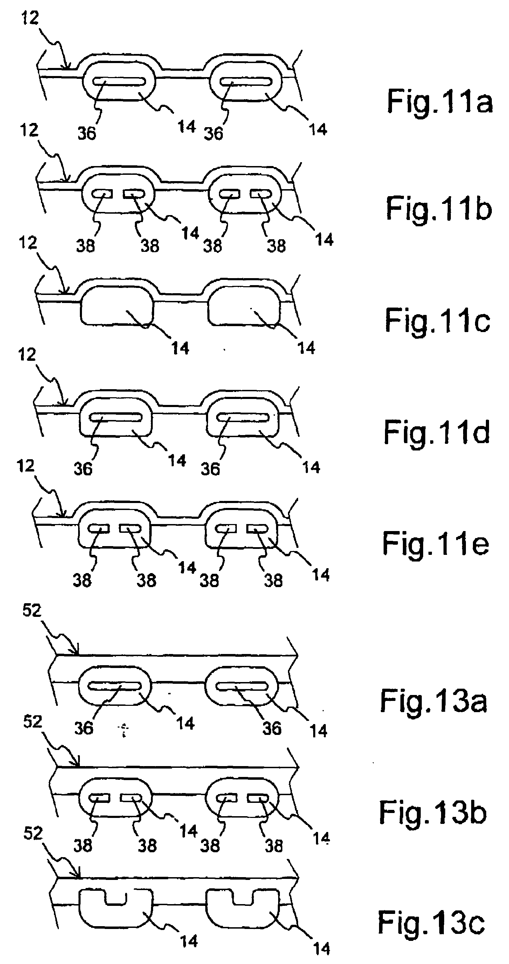

Figures 6 to 9 show the flexible sheath 1 in a laying configuration around a curve. It can be seen that the portion 26 of wall 12 bends forming two sides 28 and 30 with an angle between then. Obviously, the angle formed between these sides 28 and 30 depends on the curvature of the flexible sheath 1. Sides 28 and 30 can be disposed toward the outside of flexible sheath 1 as shown in Figures 6 and 7 or toward the inside as shown in Figures 8 and 9; in this case, no point of portion 26 of wall 12 goes beyond, toward the inside of the flexible sheath, the imaginary line around turns 14 of the rigid spiral 10.

As can readily be seen, when electrical cables are run inside the flexible sheath 1, they come in contact only with turns 14 of the rigid spiral 10. Since the friction between the sleeving of the electrical cables and the turns 14 is very low, said electrical cables run inside the flexible sheath 1 without difficulty.

With reference to Figure 10, a structural variant of the flexible sheath of the present invention is indicated by 50. The elements in common with the embodiment of Figure 5 are given the same reference numerals. The flexible sheath 50 has a rigid spiral 10 and a wall 52 associated with said rigid spiral 10. The rigid spiral 10 will not be described further as it has the same characteristics as described above. A portion 54 of the wall 52 partially covers the turns 14 as seen for wall 12. A portion 56 of wall 52 extends between two contiguous turns 14 and its outer surface is radially aligned with that of portion 54 so that the flexible sheath 50 has an outer surface with no indentations. In this way, wall 52 has one thickness for the portion 54 and a different thickness for portion 56. The flexible sheath 50 is defined commercially as "heavy" as it has proven to be particularly strong.

The rigid spiral 10 is made of various materials such as PVC (polyvinyl chloride), PU (polyurethane), PP (polypropylene), PE (polyethylene), PC (polycarbonate), EVA (ethyl vinyl acetate), Santoprene, Nylon, polyesters, and preferably PVC. To make the rigid spiral 10, these materials are used with high hardness values so that the rigid spiral 10 has the required rigidity.

The walls 12 and 52 are made of various materials such as PVC (polyvinyl chloride), PU (polyurethane), PP (polypropylene), PE (polyethylene), PC (polycarbonate), EVA (ethyl vinyl acetate), Santoprene, Nylon, polyesters, and preferably PVC. To make the walls 12 and 52, these materials are used with low hardness values so that walls 12 and 52 have the necessary flexibility.

Figures 11a to 11e show variants of the cross sections of turns 14 of rigid spiral 10. As can be seen, this section may have one hole 36 (Figure 11a) or two holes 38 (Figure 11b) or be substantially rectangular at the inside part of the flexible sheath 1 (Figure 11c) or have one hole 36 (Figure 11d) or two holes 38 (Figure 11e).

Figure 12 shows another variant of the cross section of turns 14 of rigid spiral 10. This variant has recesses 32 and 34 that make it particularly suitable for insertion of two electrical cables to create an electrical connection from one end to the other both in flexible sheath 1 and in flexible sheath 50.

Figures 13a to 13c show variants of the cross section of turns 14 of rigid spiral 10 that are particularly suitable for making the flexible sheath 50. As can be seen, this section may have one hole 36 (Figure 13a) or two holes 38 (Figure 13b) or have a "U" shape facing the outer part of flexible sheath 50.

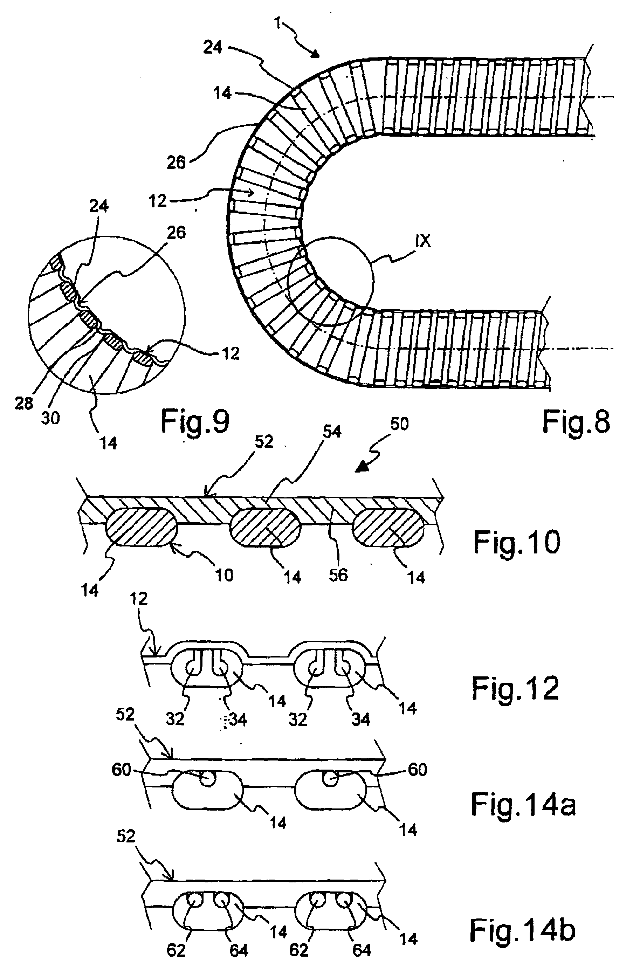

Figures 14a and 14b show further variants of the cross section of the turns 14 of rigid spiral 10 that are particularly suitable for making the flexible sheath 50. These variants have one recess 60 or two recesses 62 and 64 that make them particularly suitable for insertion of one or two steel cables conferring a particular crushing strength on flexible sheath 50.

Both flexible sheath 1 and flexible sheath 50 can be reinforced with lengthwise fibers made of polyester for example to give then good tensile strength.

Advantageously, in order to meet specific requirements, both the flexible sheath 1 and the flexible sheath 50 can be covered with other materials that are compatible with each other but have different chemical characteristics.

As can be seen from the above description, the flexible sheath of the present invention has been shown to be particularly functional and versatile as well as easy to make, so that the goal can be achieved, overcoming the disadvantages of the prior art.

Although the present invention has been described with reference to one embodiment, provided only as an illustration and example but not limitatively, it is evident that many variants and modifications can be made to the techniques in this field in the light of the above description. Hence, the present invention embraces all modifications and variants falling within the spirit and protective framework of the following claims.

## Claims

1. A flexible sheath (1, 50) has a rigid spiral (10) having a plurality of turns (14) and a wall (12, 52) associated with said rigid spiral (10, **characterized in that** each of said turns (14) has an elongate section having a length X and a width T, said turns (14) are disposed at a distance Y between two contiguous turns (14) that is less than or equal to length X, said wall (12, 52) is associated with said rigid spiral (10) from the radially external part of said turns (14), a portion (24, 54) of said wall (12, 52) partially covers said turns (14) so that part of them, H, remains free and a portion (26, 56) of said wall (12, 52) extends between two contiguous turns (14).

2. Flexible sheath (1, 50) according to Claim 1 wherein the section of each of the turns (14) has two parallel sides (16) and (18) connected by two arcs (20) and (22) so that they have an ovoid shape.

3. Flexible sheath (1) according to Claim 2 wherein the portion (26) is disposed radially toward the axis of the flexible sheath (1).

4. Flexible sheath (1) according to Claim 3 wherein the wall (12) has a thickness that is kept substantially constant for both the portions (24) and (26).

5. Flexible sheath (50) according to Claim 1 or 2 wherein the portion (56) of the wall (52) extending between two contiguous turns (14) has an outside surface radially aligned with that of portion (54).

6. Flexible sheath (1, 50) according to one of the foregoing claims wherein the dimension of part H is greater than or equal to half the distance Y.

7. Flexible sheath (1, 50) according to Claim 6 wherein the dimension of part H is greater than 0.2 mm.

8. Flexible sheath (1, 50) according to one of the foregoing claims wherein said flexible sheath (1, 50), in a laying configuration corresponding to a curve, [has'] a portion (26, 56) of wall (12, 52) bending to form two sides (28) and (30) at an angle with each other.

9. Flexible sheath (1, 50) according to Claim 8 wherein the sides (28) and (30) are disposed toward the outside of the flexible sheath (1, 50) or toward the inside.

10. Flexible sheath (1, 50) according to Claim 9 wherein, when the sides (28) and (30) are disposed toward the inside, no point of portion (26, 56) of wall (12, 52) extends beyond the line enclosing the turns (14) toward the inside of the flexible sheath.

11. Flexible sheath (1, 50) according to one of the foregoing claims wherein the rigid spiral (10) is made of various materials such as PVC (polyvinyl chloride), PU (polyurethane), PP (polypropylene), PE (polyethylene), PC (polycarbonate), EVA (ethyl vinyl acetate), Santoprene, Nylon, polyesters, and preferably PVC.

12. Flexible sheath (1, 50) according to Claim 11 wherein, to make the rigid spiral (10)), these materials are used with high hardness values so that the rigid spiral (10) has the required rigidity.

13. Flexible sheath (1, 50) according to one of the foregoing claims wherein the wall (12) and (52) is made of various materials such as PVC (polyvinyl chloride), PU (polyurethane), PP (polypropylene), PE (polyethylene), PC (polycarbonate), EVA (ethyl vinyl acetate), Santoprene, Nylon, polyesters, and preferably PVC.

14. Flexible sheath (1, 50) according to Claim 13 wherein these materials are used with low hardness values so that walls (12) and (52) have the necessary flexibility.
